# EUROPEAN PATENT APPLICATION

(11) **EP 4 804 356 A1**
(43) Date of publication of application: **09.09.2026**
(21) Application number: 25162076.1
(22) Date of filing: 06.03.2025
(51) Int. Cl.: H02G 1/10, G02B 6/50, H01B 11/22, H02G 9/02

(54) **METHOD OF SIMULTANEOUSLY LAYING A PLURALITY OF ELONGATE FLEXIBLE MEMBERS ON THE SEABED**

(71) Applicant: NKT HV Cables AB, 371 60 Lyckeby (SE)
(72) Inventor: KARLSSON, Fabian, Malmö (SE)
(74) Representative: Kransell & Wennborg KB

(57) **Abstract**

A method of simultaneously laying a plurality of elongate members (9a, 9b, 9c) on a seabed from an installation vessel, the method comprising: a) advancing a first flexible elongate member (9a) and a second flexible elongate member (9b) side by side, and a fibre optic cable (11) in between, on top of, or underneath, the first flexible elongate member (9a) and the second flexible elongate member (9b), to a first bundling device (B1), b) bundling the first flexible elongate member (9a), the second flexible elongate member (9b), and the fibre optic cable (11) to form a first cable bundle (13), c) advancing the first cable bundle (13) and a third flexible elongate member (9c) to a second bundling device (B2), d) bundling the first cable bundle (13) and the third flexible elongate member (9c) to form a second cable bundle (15), and e) lowering the second cable bundle (15) towards the seabed.

## Description

### TECHNICAL FIELD

The present disclosure generally relates to the laying of elongate flexible members, such as power cables, on the seabed from an installation vessel.

### BACKGROUND

Submarine cables are installed from marine vessels, such as cable laying ships or barges. Often, the submarine cables are fed from a drum or turntable to the seabed via a curved chute or lay wheel arranged on the vessel. The submarine cables are thus bent as they lay on the chute. The submarine cables are bent in the generally opposite direction to that on the chute or lay wheel when touching down on the seabed.

Recently power cable systems are starting to be designed with three direct current (DC) submarine power cables connecting two points of a power generation system. One for the plus pole, one for the minus pole, and one metallic return cable core. Such cable systems may also comprise a submarine fibre optic cable running externally along the length of the submarine power cables. This will introduce new installation complexities compared to a cable system with two high voltage direct current (HVDC) cables and one fibre-optic cable, especially in view of the benefits with installing all submarine cables connecting two points at the same time because it saves installation time, which reduces the risks of changing weather conditions at sea and costs that follow. Another benefit is that it requires less seabed disturbance as only one trench or burial campaign will be required rather than two separate trenches, which means less environmental impact and reduced impact on benthic organisms.

### SUMMARY

Common simultaneous installation of multiple cables can be done by bundling all submarine cables and lowering them into the water together. It is problematic to lower the cables if they are arranged in a flat configuration, i.e., arranged beside each other in one plane, because it is difficult to maintain the catenary stability. The cables with the lower specific gravity will want to move out of line with the others, risking damaging the fibre optic cable. In a trefoil configuration, with one power cable on top of the other power cables, the bundle will be bent over the chute and at the touchdown point. This leads to a mismatch in length of the power cables. The inner power cable(s) with respect to the curve formed by the bundle, is/are compressed and the outer(s) is/are elongated. With a tight bundle, this can lead to large compressive and tensile forces in the individual cables in the bundle and more complexity during the installation process.

In view of the above an object of the present disclosure is to provide a method of simultaneously laying three or more elongate flexible members on a seabed from an installation vessel, which solves or at least mitigates the problems of the prior art.

There is hence provided a method of simultaneously laying a plurality of elongate members on a seabed from an installation vessel, the method comprising: a) advancing a first flexible elongate member and a second flexible elongate member side by side, and a fibre optic cable in between, on top of, or underneath, the first flexible elongate member and the second flexible elongate member, to a first bundling device, b) bundling the first flexible elongate member, the second flexible elongate member, and the fibre optic cable to form a first cable bundle, c) advancing the first cable bundle and a third flexible elongate member to a second bundling device, d) bundling the first cable bundle and the third flexible elongate member to form a second cable bundle, and e) lowering the second cable bundle towards the seabed.

As a result, the flexible elongate members are maintained in position in relation to each other during the laying process and thus the second cable bundle will exhibit catenary stability. The risk that the fibre optic cable is moved around inside the second cable bundle is therefore reduced.

That the elongate members are laid on the seabed encompasses both laying the elongate members on the surface of the seabed or underneath the surface of the seabed, e.g., in a trench formed by the likes of a trencher or subsea plough.

According to one embodiment the first flexible elongate member and the second flexible elongate member have the same outer diameter.

The first flexible elongate member and the second flexible elongate member may have the same cross-sectional structure.

According to one embodiment the third flexible elongate member has a smaller outer diameter than the first flexible elongate member and the second flexible elongate member.

The third flexible elongate member may have different cross-sectional structure than the first flexible elongate member and the second flexible elongate member.

According to one embodiment the first flexible elongate member is a first power cable, and the second flexible elongate member is a second power cable.

According to one embodiment the first power cable is a first DC power cable, and the second power cable is a second DC power cable.

The first DC power cable may be a first HVDC power cable. The second DC power cable may be a second HVDC power cable.

According to one embodiment the third flexible elongate member is a metallic return cable.

The first power cable may according to one example be a first AC power cable.

The second power cable may according to one example be a second AC power cable.

According to one embodiment the bundling in step b) involves laying bundling material helically with a first lay direction around the first flexible elongate member, the second flexible elongate member, and the fibre optic cable, and step d) involves laying bundling material helically with a second lay direction opposite to the first direction around the first cable bundle and the third flexible elongate member.

The first lay direction is an S or Z lay direction, and the second lay direction is Z if the first lay direction is S, or S if the first lay direction is Z.

According to one embodiment in step d) the first cable bundle and the third flexible elongate member are bundled such that the first flexible elongate member, the second flexible elongate member, and the third flexible elongate member obtains a flat configuration in the second cable bundle.

According to one embodiment the installation vessel is a cable laying vessel.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a plan view of an example of a back deck of an installation vessel;
Figs 2-3 show cross-sections at different locations along the length of the flexible elongate members as they extend on the back deck; and
Fig. 4 is a flowchart of a method of simultaneously laying a plurality of flexible elongate members on a seabed from the installation vessel.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

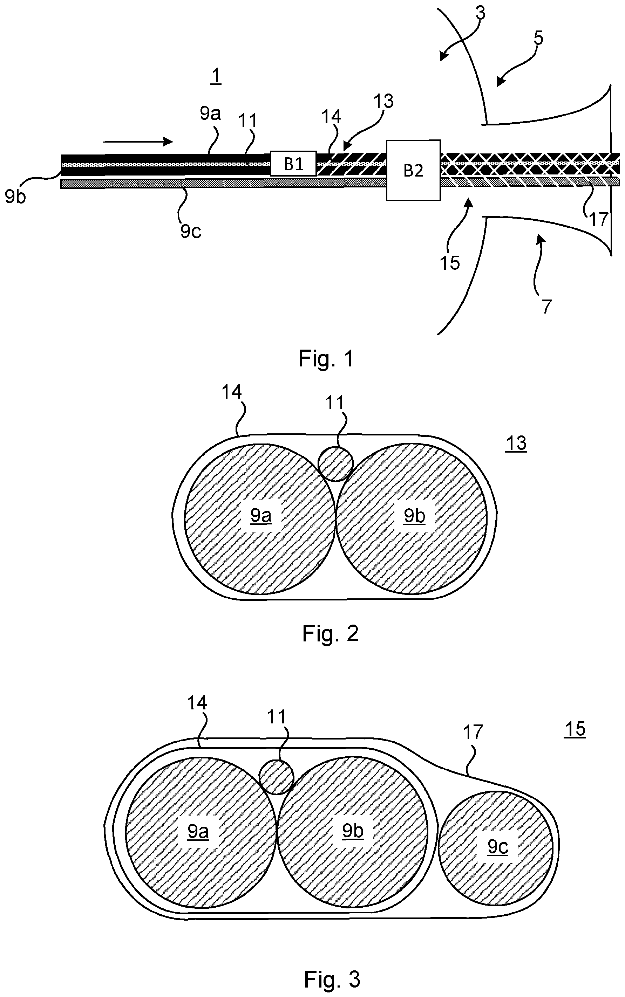

Fig. 1 is a plan view of a back deck 3 of an installation vessel 1.

The installation vessel 1 may for example be a cable laying vessel or a cable laying barge.

The installation vessel 1 has a chute or lay wheel 7. The chute or lay wheel 7 may be provided at the aft 5 of the installation vessel 1.

The installation vessel 1 is configured for simultaneously laying three flexible elongate members and a fibre optic cable on the seabed via the chute or lay wheel 7. The flexible elongate elements may be power cables, in particular submarine power cables, flexible pipelines, flexible umbilicals, or telecommunications cables.

In case of power cables, a first and a second of the flexible elongate members may be DC cables, such as HVDC cables, and a third of the three flexible elongate members may be a metallic return cable or a redundancy cable. In this case, the first flexible elongate member and the second flexible elongate member may have the same outer diameter, and the third flexible elongate member may have a smaller outer diameter than the first and the second flexible elongate member. In another example, the first, the second, and the third elongate flexible members may be AC cables.

In the example described herein, three flexible elongate members are simultaneously laid on the seabed from the installation vessel 1. Additionally, a fibre optic cable is laid on the seabed together with the flexible elongate members.

The installation vessel 1 may be provided with a plurality of lay tensioners, or tensioning devices. The lay tensioners may be arranged on the back deck 3. Each lay tensioner may for example be one of a track tensioner or a capstan wheel.

According to the example, the number of lay tensioners is three, i.e., one for each flexible elongate member. There could in other examples be fewer lay tensioners for advancing three flexible elongate members. For instance, two flexible elongate members may in some examples be arranged in a piggybacked configuration and advanced along the back deck by a single lay tensioner e.g., by a twin cable/product tensioning device. In this case, fewer lay tensioners than three would be required.

The installation vessel 1 may further be provided with a plurality of bundling devices B1, B2 arranged on the back deck 3. According to the example, the installation vessel 1 is provided with a first bundling device B1 and a second bundling device B2. The first bundling device B1 and the second bundling device B2 are arranged on the back deck 3.

The first bundling device B1 and the second bunding device B2 are arranged one after the other in a direction towards the aft 5, i.e., in the aft direction, parallel with a central longitudinal axis of the installation vessel 1. The bunding devices B1-B2 are arranged one after the other between the lay tensioners and the chute or lay wheel 7 of the installation vessel 1.

The first bundling device B1 and the second bunding device B2 may be arranged in line with each other.

The first bundling device B1 and the second bunding device B2 may be arranged in line with the chute or lay wheel 7.

The first bundling device B1 is arranged at a first location on the back deck 3. The first bundling device B1 is located closer to the lay tensioners than the second bundling device B2. The second bundling device B2 is located closer to the chute or lay wheel 7 than the first bundling device B1.

The second bundling device B2 may according to one example be broader, or wider, than the first bundling device B1 in a direction from the port side to the starboard side. Alternatively, or additionally, the first bundling device B1 and the second bundling device B2 may be arranged offset in relation to each other in a direction from the port side to the starboard side, but with an overlap in a direction towards the aft 5 along an axis parallel with the central longitudinal axis of the installation vessel 1.

The installation vessel 1 may comprise one or more storage units, such as cable drums, turntables, or cable carousels, for storage of the flexible elongate members to be laid on the seabed. The flexible elongate members are fed from the one or more storage units by means of the lay tensioners to the bundling devices B1-B2 as will be described in more detail herein.

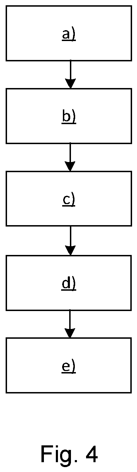

With reference to Figs 1-4, a method of simultaneously laying a plurality of flexible elongate members 9a, 9b, 9c together with a fibre optic cable 11 on the seabed from the installation vessel 1 will now be described.

In a step a) a first flexible elongate member 9a and a second flexible elongate member 9b are advanced side by side, together with a fibre optic cable 11 in between, on top of, or underneath, the first flexible elongate member 9a and the second flexible elongate member 9b, to the first bundling device B1.

The first flexible elongate member 9a, the second flexible elongate member 9b, and the fibre optic cable 11 are advanced in parallel with each other.

The first flexible elongate member 9a and the second flexible elongate member 9b may be advanced by means of one or more lay tensioner.

The first flexible elongate member 9a and the second flexible elongate member 9b may bear against, or touch, each other as they are advanced side by side to the first bundling device B1. As the fibre optic cable 11 rests in between, on, or underneath, the first flexible elongate member 9a and the second flexible elongate member 9b, the first flexible elongate member 9a, the second flexible elongate member 9b, and the fibre optic cable 11 are arranged in trefoil formation.

Concurrently with advancing the first flexible elongate member 9a, the second flexible elongate member 9b, and the fibre optic cable 11 towards the first bundling device B1, a third flexible elongate member 9c may be advanced towards the second bundling device B2.

In the example shown in Fig. 1, the third flexible elongate member 9c is advanced in parallel with the first flexible elongate member 9a, the second flexible elongate member 9b, and the fibre optic cable 11, adjacent to the second flexible elongate member 9b.

The third flexible elongate member 9c may be advanced by means of a lay tensioner.

In a step b) the first flexible elongate member 9a, the second flexible elongate member 9b, and the fibre optic cable 11 are bundled by the first bundling device B1 to form a first cable bundle 13.

The bundling may be made with bundling material 14 such as silo wrap/high strength cling film, elastic strapping bands, or yarn such as polymeric yarn.

The bundling in step b) may be performed continuously along the entire length of the first flexible elongate member 9a, the second flexible elongate member 9b, and the fibre optic cable 11 that is lowered to the seabed.

The bundling in step b) may involve laying the bundling material 14 helically with a first lay direction around the first flexible elongate member 9a, the second flexible elongate member 9b, and the fibre optic cable 11.

Fig. 2 is a cross-section of the first cable bundle 13 viewed in a direction towards the aft 5, after the first bundling device B1 but before the second bundling device B2. The first flexible elongate member 9a, the second flexible elongate member 9b, and the fibre optic cable 11 are arranged in a trefoil formation. The first flexible elongate member 9a, the second flexible elongate member 9b, and the fibre optic cable 11 are bundled with the bundling material 14.

The third flexible elongate member 9c bypasses the first bunding device B1. The third flexible elongate member 9c is thus not bundled with the first flexible elongate member 9a, the second flexible elongate member 9b, and the fibre optic cable 11 by the first bundling device B1.

In a step c) the first cable bundle 13 and a third flexible elongate member 9c are advanced to the second bundling device B2.

The third flexible elongate member 9c may bear against, or touch, the first cable bundle 13 as the third flexible elongate member 9c and the first cable bundle 13 are advanced towards the second bundling device B2.

In a step d) the first cable bundle 13 and the third flexible elongate member 9c are bundled to form a second cable bundle 15.

The bundling may be made with bundling material 17 such as silo wrap/high strength cling film, elastic strapping bands, or yarn such as polymeric yarn.

The bundling in step d) may be performed continuously along the entire length of the first cable bundle 13 and the third flexible elongate member 9c which is lowered towards the seabed.

Step d) may involve laying the bundling material 17 helically with a second lay direction opposite to the first direction around the first cable bundle 13 and the third flexible elongate member 9c. Alternatively, step d) may involve laying bundling material helically with the first lay direction around the first cable bundle 13 and the third flexible elongate member 9c. In this case, the bundling in steps b) and d) may involve laying bundling material helically with the same direction.

Fig. 3 is a cross-section of the second cable bundle 15 viewed in a direction towards the aft 5, after the second bundling device B2. In the second cable bundle 15, the first flexible elongate member 9a, the second flexible elongate member 9b, and the third flexible elongate member 9c are arranged in a flat formation. The first cable bundle 13 and the third flexible elongate member 9c are bundled with the bundling material 17.

In a step e) the second cable bundle 15 is lowered to the seabed. The second cable bundle 15 may be lowered towards the seabed from the installation vessel 1 via the chute or lay wheel 7.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of simultaneously laying a plurality of elongate members (9a, 9b, 9c) on a seabed from an installation vessel, the method comprising:
a) advancing a first flexible elongate member (9a) and a second flexible elongate member (9b) side by side, and a fibre optic cable (11) in between, on top of, or underneath, the first flexible elongate member (9a) and the second flexible elongate member (9b), to a first bundling device (B1),
b) bundling the first flexible elongate member (9a), the second flexible elongate member (9b), and the fibre optic cable (11) to form a first cable bundle (13),
c) advancing the first cable bundle (13) and a third flexible elongate member (9c) to a second bundling device (B2),
d) bundling the first cable bundle (13) and the third flexible elongate member (9c) to form a second cable bundle (15), and
e) lowering the second cable bundle (15) towards the seabed.

2. Method as claimed in claim 1, wherein the first flexible elongate member (9a) and the second flexible elongate member (9b) have the same outer diameter.

3. Method as claimed in claim 1 or 2, wherein the third flexible elongate member (9c) has a smaller outer diameter than the first flexible elongate member (9a) and the second flexible elongate member (9b).

4. Method as claimed in any of the preceding claims, wherein the first flexible elongate member (9a) is a first power cable, and the second flexible elongate member (9b) is a second power cable.

5. Method as claimed in claim 4, wherein the first power cable is a first DC power cable, and the second power cable is a second DC power cable.

6. Method as claimed in any of the preceding claims, wherein the third flexible elongate member (9c) is a metallic return cable.

7. Method as claimed in any of the preceding claims, wherein the bundling in step b) involves laying bundling material (14) helically with a first lay direction around the first flexible elongate member (9a), the second flexible elongate member (9b), and the fibre optic cable (11), and step d) involves laying bundling material (17) helically with a second lay direction opposite to the first direction around the first cable bundle (13) and the third flexible elongate member (9c).

8. Method as claimed in any of the preceding claims, wherein in step d) the first cable bundle (13) and the third flexible elongate member (9c) are bundled such that the first flexible elongate member (9a), the second flexible elongate member (9b), and the third flexible elongate member (9c) obtains a flat configuration in the second cable bundle (15).

9. Method as claimed in any of the preceding claims, wherein the installation vessel (1) is a cable laying vessel.
